(19) Europäisches Patentamt
European Patent Office
Office européen des brevets

(11) EP 4 711 394 A1

(12) **EUROPEAN PATENT APPLICATION**
published in accordance with Art. 153(4) EPC

(43) Date of publication:
**18.03.2026 Bulletin 2026/12**

(21) Application number: **25793602.1**

(22) Date of filing: **15.04.2025**

(51) International Patent Classification (IPC):
***C08F 299/08*** *(2006.01)* ***B29C 64/106*** *(2017.01)*
***B33Y 10/00*** *(2015.01)* ***B33Y 70/00*** *(2020.01)*
***C08K 3/36*** *(2006.01)* ***C08K 9/06*** *(2006.01)*
***C08L 83/06*** *(2006.01)*

(52) Cooperative Patent Classification (CPC):
**B29C 64/106; B33Y 10/00; B33Y 70/00; C08F 299/08; C08K 3/36; C08K 9/06; C08L 83/06**

(86) International application number:
**PCT/JP2025/014752**

(87) International publication number:
**WO 2025/225449 (30.10.2025 Gazette 2025/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.04.2024 JP 2024072125**

(71) Applicant: **SHIN-ETSU CHEMICAL CO., LTD.**
**Tokyo 100-0005 (JP)**

(72) Inventors:
- **MATSUMOTO, Nobuaki**
  **Annaka-shi, Gunma 379-0224 (JP)**
- **KITAGAWA, Taichi**
  **Annaka-shi, Gunma 379-0224 (JP)**
- **OZAI, Toshiyuki**
  **Annaka-shi, Gunma 379-0224 (JP)**
- **MATSUMURA, Kazuyuki**
  **Annaka-shi, Gunma 379-0224 (JP)**

(74) Representative: **Mewburn Ellis LLP**
**Aurora Building**
**Counterslip**
**Bristol BS1 6BX (GB)**

(54) **UV-CURABLE SILICONE COMPOSITION FOR STEREOLITHOGRAPHY, CURED PRODUCT THEREOF, AND CURING METHOD**

(57) Provided is a UV-curable silicone composition for stereolithography, the UV-curable silicone composition containing:
(A) an organopolysiloxane having, per molecule, two or more radically polymerizable group-containing groups each bonded to a silicon atom via an oxygen atom directly bonded to the silicon atom (excluding those containing a heteroatom other than an oxygen atom);
(B) hydrophobic silica particles having an average particle size of 10-1,000 nm and having a hydrophobicity of 60% or more as measured by a methanol titration method; and
(C) a photopolymerization initiator,
wherein when the composition is irradiated with ultraviolet light having a wavelength of 405 nm at 25°C at a dose of 8,000 mJ/cm$^2$, and then cured for 24 hours in an environment of 85°C and 85% RH to obtain a cured product having a thickness of 2.0 mm, the cured product has a tensile strength of 4.5 MPa or more and an elongation at break of 300% or more.

EP 4 711 394 A1

## Description

### TECHNICAL FIELD

This invention relates to a ultraviolet-curable silicone composition for stereolithography or optical fabrication, a cured product thereof, and a method for curing the UV-curable silicone composition.

### BACKGROUND ART

Recently, active efforts are made to develop fabrication materials for use in 3D printers. A variety of materials covering from metals to resins are used in optical fabrication. Of the resins, acrylate and urethane acrylate based photocurable resin compositions are often used, but cured products thereof are very hard and inflexible (Patent Document 1).

Patent Document 2 discloses a UV-curable low-viscosity silicone material for 3D printers of ink jet type. This material has the advantages of brief cure by UV irradiation and a quite high accuracy of fabrication, but suffers from poor mechanical strength and heat resistance as compared with conventional silicone materials.

Then, Patent Documents 3 and 4 describe the development of UV-curable silicone compositions for the optical fabrication material which is increasingly demanded in these days.

However, some of these compositions are brittle due to low elongation as compared with the mechanical strength of heat-curable silicone compositions. Nowadays, the optical fabrication at a higher viscosity than in the prior art is possible.

### PRIOR ART DOCUMENTS

### PATENT DOCUMENTS

| | |
|---|---|
| Patent Document 1: | JP 5890990 |
| Patent Document 2: | JP 6687111 |
| Patent Document 3: | JP 6962290 |
| Patent Document 4: | JP 7342910 |

### SUMMARY OF INVENTION

### TECHNICAL PROBLEM

An object of the invention, which has been made under the above-mentioned circumstances, is to provide a UV-curable silicone composition which has a viscosity compatible with stereolithography of the laser system or digital light processing (DLP) system, can be fabricated even in a low dose of UV, and when subjected to post treatment, gives a cured product having satisfactory rubber physical properties, and a cured product thereof.

### SOLUTION TO PROBLEM

Making extensive investigations to attain the above object, the inventors have found that by adding a photopolymerization initiator to an organopolysiloxane containing a specific radical polymerizable group-containing group bonded to a silicon atom via an oxygen atom directly bonded to the silicon atom, and hydrophobic silica particles having an average particle size in the range of 10 to 1,000 nm and a hydrophobicity of at least 60% as measured by the methanol titration method, there is obtained a UV-curable silicone composition which is compatible with stereolithography and when subjected to primary cure by UV irradiation and secondary cure by condensation, gives a cured product having satisfactory rubber physical properties. The invention is predicated on this finding.

Accordingly, the invention is defined as follows.

1. A ultraviolet-curable silicone composition for stereolithography comprising:

    (A) an organopolysiloxane containing per molecule at least two radical polymerizable group-containing groups (exclusive of a group containing a heteroatom other than oxygen) each bonded to a silicon atom via an oxygen

atom directly bonded to the silicon atom,

(B) hydrophobic silica particles having an average particle size of 10 to 1,000 nm and a hydrophobicity of at least 60% as measured by the methanol titration method, and

(C) a photopolymerization initiator,

wherein a cure product of 2.0 mm thick obtained by irradiating UV of wavelength 405 nm to the composition at 25°C in a dose of 8,000 mJ/cm$^2$, and curing in an environment of 85°C and 85% RH for 24 hours has a tensile strength of at least 4.5 MPa and an elongation at break of at least 300%.

2. The UV-curable silicone composition of 1 wherein component (A) is an organopolysiloxane containing 2 to 6 acryloyloxyalkyloxy or methacryloyloxyalkyloxy groups each bonded to a silicon atom per molecule.

3. The UV-curable silicone composition of 1 wherein component (A) is an organopolysiloxane having the formula (1):

[Chem. 1]

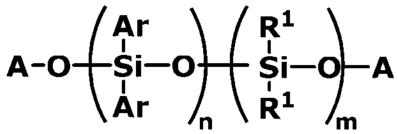

(1)

wherein n is a number satisfying 1 ≤ n ≤ 1,000, m a number satisfying 1 ≤ m ≤ 1,000, the order of arrangement of siloxane units with n and m is arbitrary, Ar is each independently a $C_6$-$C_{20}$ aryl group, $R^1$ is each independently a $C_1$-$C_{20}$ monovalent hydrocarbon group, A is a group having the formula (2):

[Chem. 2]

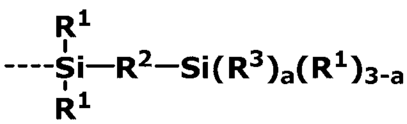

(2)

wherein $R^1$ is as defined above, $R^2$ is oxygen or a $C_1$-$C_{20}$ alkylene group, $R^3$ is each independently an acryloyloxyalkyloxy or methacryloyloxyalkyloxy group, "a" is a number satisfying 1 ≤ a ≤ 3, the broken line designates a valence bond.

4. The UV-curable silicone composition of any one of 1 to 3, comprising

100 parts by weight of component (A),

10 to 500 parts by weight of component (B), and

0.01 to 20 parts by weight of component (C).

5. The UV-curable silicone composition of any one of 1 to 4, having a viscosity of up to 500 Pa·s at 23°C.

6. A cured product of a UV-curable silicone composition for stereolithography comprising:

(A) an organopolysiloxane containing per molecule at least two radical polymerizable group-containing groups (exclusive of a group containing a heteroatom other than oxygen) each bonded to a silicon atom via an oxygen atom directly bonded to the silicon atom,

(B) hydrophobic silica particles having an average particle size of 10 to 1,000 nm and a hydrophobicity of at least 60% as measured by the methanol titration method, and

(C) a photopolymerization initiator,

wherein the cure product has a tensile strength of at least 4.5 MPa and an elongation at break of at least 300% when its thickness is 2.0 mm.

7. A method for curing the UV-curable silicone composition of any one of 1 to 5, comprising:

step (i) of irradiating UV to the UV-curable silicone composition of any one of claims 1 to 5 for radically curing the composition to form a primary cured product, and

step (ii) of condensation curing the primary cured product to form a secondary cured product.

8. The method of 7 wherein the condensation cure in step (ii) is moisture cure.

ADVANTAGEOUS EFFECTS OF INVENTION

The UV-curable silicone composition for stereolithography is applicable to optical fabrication of the laser system or DLP system. A cured product of the composition after UV cure exhibits satisfactory rubber physical properties upon exposure to moisture.

DESCRIPTION OF EMBODIMENTS

The invention is described in detail.

[1] Ultraviolet-curable silicone composition for stereolithography

The invention provides a UV-curable silicone composition for stereolithography comprising components (A) to (C):

(A) an organopolysiloxane containing per molecule at least two radical polymerizable group-containing groups each bonded to a silicon atom via an oxygen atom directly bonded to the silicon atom,
(B) hydrophobic silica particles having an average particle size of 10 to 1,000 nm and a hydrophobicity of at least 60% as measured by the methanol titration method, and
(C) a photopolymerization initiator.

(A) Organopolysiloxane

Component (A) used herein is a crosslinking component in the composition. It is an organopolysiloxane containing at least two radical polymerizable group-containing groups each bonded to a silicon atom via an oxygen atom directly bonded to the silicon atom per molecule, preferably 2 to 6 radical polymerizable group-containing groups per molecule, more preferably 2 to 4 radical polymerizable group-containing groups per molecule. It is noted that the radical polymerizable group-containing group does not contain a heteroatom other than oxygen.

Due to the radical polymerizable group-containing group bonded to a silicon atom via an oxygen atom directly bonded to the silicon atom, the inventive composition is radical curable and condensation curable. In particular, by irradiating UV to the composition for radical cure to form a primary cured product and post-treating the primary cured product with moisture for condensation cure, there is obtained a secondary cured product having better rubber physical properties.

Examples of the radical polymerizable group-containing group include acryloyloxyalkyloxy or methacryloyloxyalkyloxy groups each bonded to a silicon atom.

The rubber physical properties of the cured product are improved by post-treatment with moisture for the reason that the silicon-bonded site such as silicon-bonded (meth)acryloyloxyalkyloxy group undergoes hydrolytic condensation, whereby chain-extending reaction of organopolysiloxane molecules as component (A) and crosslinking reaction of the organopolysiloxane as component (A) with silanol groups on the surface of silica particles as component (B) take place. As used herein, the (meth)acryloyloxyalkyloxy group refers to acryloyloxyalkyloxy or methacryloyloxyalkyloxy group.

The radical polymerizable group-containing group may be positioned at the end (one end or both ends) of the molecular chain or a midway position of the molecular chain, or both. Positioning at the end (one end or both ends) of the molecular chain is preferred, and positioning at both ends of the molecular chain is more preferred.

The organopolysiloxane as component (A) contains silicon-bonded groups other than the radical polymerizable group-containing group in its molecule, examples of which include $C_1$-$C_{20}$ monovalent hydrocarbon groups, preferably $C_1$-$C_{10}$, more preferably $C_1$-$C_8$ monovalent hydrocarbon groups exclusive of aliphatic unsaturated groups. In the monovalent hydrocarbon group, some or all of the carbon-bonded hydrogen atoms may be substituted by other substituents such as halogen.

The monovalent hydrocarbon group may be straight, branched or cyclic. In view of ease of synthesis, alkyl, aryl and haloalkyl groups are suitable. Exemplary groups include methyl, ethyl, n-propyl, isopropyl, n-butyl, isobutyl, tert-butyl, n-hexyl, cyclohexyl, n-octyl, 2-ethylhexyl, n-decyl, phenyl, tolyl, xylyl, naphthyl, chloromethyl, 3-chloropropyl, and 3,3,3-trifluoropropyl. Inter alia, $C_1$-$C_3$ alkyl groups and aryl groups are preferred, with methyl, ethyl and phenyl being more preferred.

The molecular structure of component (A) is preferably a straight or branched backbone (including straight

backbone having a branch in part) composed of repeating diorganosiloxane units, preferably a straight diorganopolysiloxane blocked at both ends of the molecular chain with units having the radical polymerizable group-containing group.

Preferred as component (A) is an organopolysiloxane having the formula (1).

[Chem. 3]

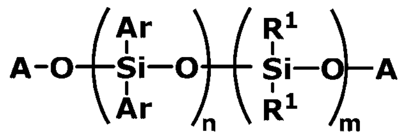

(1)

In formula (1), $R^1$ is each independently a $C_1$-$C_{20}$ monovalent hydrocarbon group, preferably $C_1$-$C_{10}$, more preferably $C_1$-$C_8$ monovalent hydrocarbon group.

The $C_1$-$C_{20}$ monovalent hydrocarbon group $R^1$ in formula (1) is preferably a $C_1$-$C_{20}$ monovalent aliphatic hydrocarbon group and may be straight, branched or cyclic. Examples thereof include straight, branched or cyclic alkyl groups such as methyl, ethyl, n-propyl, isopropyl, n-butyl, isobutyl, tert-butyl, n-hexyl, cyclohexyl, n-octyl, 2-ethylhexyl and n-decyl; and alkenyl groups such as vinyl, allyl (or 2-propenyl), 1-propenyl, isopropenyl and butenyl.

In the monovalent hydrocarbon group, some or all of the carbon-bonded hydrogen atoms may be substituted by halogen atoms (e.g., chlorine, fluorine and bromine), cyano or other substituents. Examples include halo-substituted hydrocarbon groups such as chloromethyl, bromoethyl and trifluoropropyl, and cyano- substituted hydrocarbon groups such as cyanoethyl.

Of these, $R^1$ is preferably a $C_1$-$C_3$ alkyl group, more preferably methyl or ethyl.

In formula (1), Ar is each independently a $C_6$-$C_{20}$ aryl group, preferably $C_6$-$C_{10}$ aryl group. Examples thereof include aromatic hydrocarbon groups such as phenyl, biphenyl and naphthyl, and aromatic groups containing a heteroatom (e.g., O, S or N), such as furanyl. The aromatic group may further contain substituents such as halogen (e.g., chlorine, bromine and fluorine). Of these, Ar is preferably an unsubstituted aryl group, especially phenyl.

In formula (1), n is a number satisfying $1 \leq n \leq 1{,}000$. When it is taken into account to further improve the viscosity of the composition or the dynamic properties of a cured product, n is preferably a number satisfying $1 \leq n \leq 400$, more preferably $1 \leq n \leq 200$. If n is less than 1, the compound is more volatile. If n exceeds 1,000, the composition has too high a viscosity to shape.

In formula (1), m is a number satisfying $1 \leq m \leq 1{,}000$. When it is taken into account to further improve the viscosity of the composition or the dynamic properties of a cured product, m is preferably a number satisfying $1 \leq m \leq 400$, more preferably $10 \leq m \leq 300$. If m is less than 1, the compound is more volatile. If m exceeds 1,000, the composition has too high a viscosity to shape.

In formula (1), n+m is preferably a number satisfying $2 \leq n+m \leq 2{,}000$, more preferably $2 \leq n+m \leq 1{,}000$, even more preferably $2 \leq n+m \leq 800$. If n+m is less than 2, the compound is sometimes more volatile. If n+m exceeds 2,000, the composition has too high a viscosity to shape.

The order of arrangement of siloxane units with n and m is arbitrary.

In formula (1), A is a group having the formula (2).

[Chem. 4]

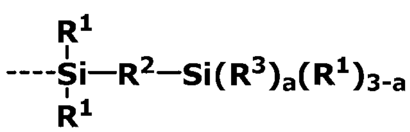

(2)

Herein the broken line designates a valence bond.

In formula (2), $R^1$ is as defined above.

In formula (2), $R^2$ is oxygen or a $C_1$-$C_{20}$ alkylene group, preferably $C_1$-$C_{10}$, more preferably $C_1$-$C_5$ alkylene group.

The $C_1$-$C_{20}$ alkylene group $R^2$ in formula (2) may be straight, branched or cyclic. Examples thereof include methylene, ethylene, propylene, trimethylene, tetramethylene, isobutylene, pentamethylene, hexamethylene, heptamethylene, octamethylene, nonamethylene and decylene.

Of these, $R^2$ is preferably oxygen, methylene, ethylene and trimethylene, with oxygen and ethylene being more preferred.

$R^3$ is each independently an acryloyloxyalkyloxy or methacryloyloxyalkyloxy group.

The carbon count of the alkyl (or alkylene) group in the acryloyloxyalkyloxy or methacryloyloxyalkyloxy group is preferably 1 to 10, more preferably 1 to 5 though not critical. Examples of such alkyl group include those exemplified for the group $R^1$, but of 1 to 10 carbon atoms.

Examples of $R^3$ are shown by the following formulae, but not limited thereto.

[Chem. 5]

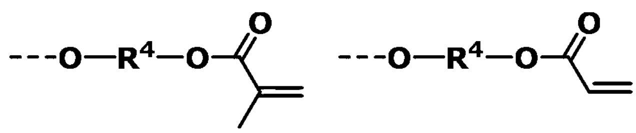

Herein the broken line designates a valence bond.

In the above formulae, $R^4$ is a $C_1$-$C_{10}$ alkylene group, preferably $C_1$-$C_5$ alkylene group. Examples of the group $R^4$ include those exemplified for the group $R^2$, but of 1 to 10 carbon atoms. Inter alia, methylene, ethylene and trimethylene are preferred, with ethylene being most preferred.

In formula (2), "a" is a number satisfying $1 \leq a \leq 3$, preferably 1 or 2.

Component (A) may be a homopolymer having the aforementioned molecular structure, a copolymer having the aforementioned molecular structure, or a mixture of two or more such polymers.

Examples of the organopolysiloxane as component (A) include those having the formulae (3) and (4), but are not limited thereto.

[Chem. 6]

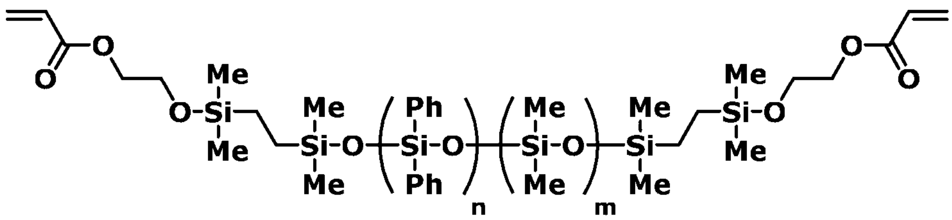

(3)

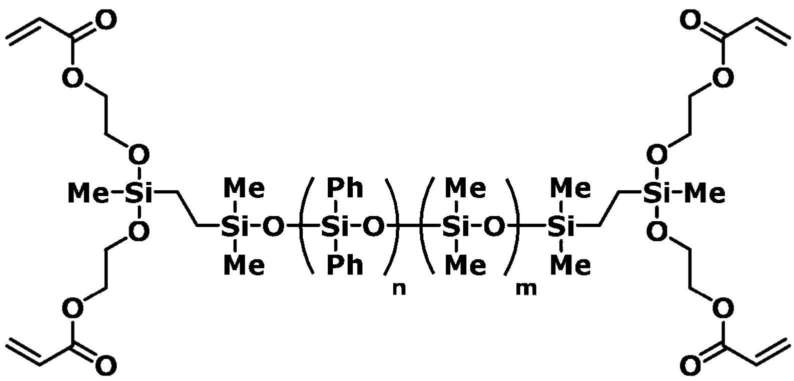

(4)

Herein Me stands for methyl, Ph stands for phenyl, n and m are as defined above. The order of arrangement of siloxane units with n and m is arbitrary.

The organopolysiloxane can be prepared, for example, by effecting hydrosilation reaction of a both end dimethylvinylsiloxy-capped dimethylsiloxane/diphenylsiloxane copolymer with chlorodimethylsilane or dichloromethylsilane, and reacting the hydrosilation reaction product with 2-hydroxyethyl acrylate.

(B) Hydrophobic silica particles

Component (B) is hydrophobic silica particles. When included, component (B) is effective for enhancing the mechanical strength of a cured product while maintaining the composition flowable.

Component (B) should have an average particle size of 10 to 1,000 nm, preferably 20 to 1,000 nm, more preferably 20 to 500 nm, even more preferably 30 to 200 nm. If the average particle size is less than 10 nm, particles are more agglomerative, losing flow. With an average particle size in excess of 1,000 nm, the mechanical strength increasing effect is less. Notably, the average particle size is measured as a median diameter ($D_{50}$) on volume basis in particle size distribution measurement by the laser light diffractometry.

Component (B) should have a hydrophobicity of at least 60%, preferably at least 64%, as measured by the methanol titration method. Silica particles having a high hydrophobicity do not agglomerate even when a composition is heavily loaded therewith. Then the mechanical strength of a cured product is enhanced without detracting from fluidity.

The hydrophobicity is determined by the methanol titration method described below.

(1) A sample is put on a predetermined volume of deionized water. With stirring, methanol is added dropwise.
(2) The volume of methanol added until the sample is entirely suspended in the deionized water is read.
(3)

A value of [{volume (mL) of methanol added}/{volume (mL) of methanol added + volume (mL) of deionized water}] × 100 is the hydrophobicity.

Although the shape of component (B) used herein is not particularly limited, spherical shape is preferred.

The amount of component (B) blended is 10 to 500 parts by weight, preferably 20 to 300 parts by weight, more preferably 30 to 200 parts by weight per 100 parts by weight of component (A). When the amount is 10 parts by weight or more, the effect of improving the mechanical strength of a cured product is obtained. When the amount is 500 parts by weight or less, the composition is not excessively increased in viscosity and remains flowable.

Preferred as component (B) are silica particles bearing on their surface $R^7SiO_{3/2}$ units and $R^9{}_3SiO_{1/2}$ units wherein $R^7$ is a $C_1$-$C_{20}$ substituted or unsubstituted monovalent hydrocarbon group and $R^9$ which may be identical or different is a $C_1$-$C_6$ substituted or unsubstituted monovalent hydrocarbon group.

Such component (B) is obtained, for example, by hydrolyzing and condensing a tetrafunctional silane compound, alkyl silicate or a mixture thereof, and introducing on the surface of the resulting hydrophilic silica particles $R^7SiO_{3/2}$ units and then $R^9{}_3SiO_{1/2}$ units through hydrolytic condensation.

[Method for synthesis of component (B)]

Specifically, component (B) is preferably synthesized by the method including the following three steps.

Step (α): synthesizing hydrophilic silica particles

Step (β): subjecting hydrophilic silica particles to hydrophobic surface treatment to form intermediate component (B)

Step (γ): further subjecting the intermediate component (B) to hydrophobic surface treatment, obtaining hydrophobic silica particles as component (B)

These steps are described in sequence.

• Step (α): Synthesis of hydrophilic silica particles

Step (α) is to hydrolyze and condense either one or both of a tetrafunctional silane compound having the general formula (I) and an alkyl silicate having the general formula (II) in the presence of a basic substance in a mixture of a hydrophilic organic solvent and water, obtaining a dispersion of hydrophilic silica particles.

$$Si(OR^5)_4 \qquad (I)$$

[Chem. 7]

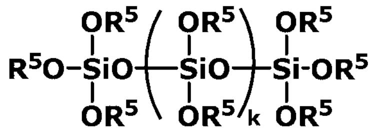

(II)

Herein $R^5$ which may be identical or different is a $C_1$-$C_6$ monovalent hydrocarbon group, and k is a number of 1 to 100.

In formulae (I) and (II), $R^5$ which may be identical or different is a monovalent hydrocarbon group of 1 to 6 carbon atoms, preferably 1 to 4 carbon atoms, more preferably 1 or 2 carbon atoms.

The monovalent hydrocarbon group $R^5$ may be straight, branched or cyclic. Examples thereof include alkyl groups such as methyl, ethyl, n-propyl, isopropyl and n-butyl, and aryl groups such as phenyl. Of these, $R^5$ is preferably methyl, ethyl, n-propyl or n-butyl, more preferably methyl or ethyl.

In formula (II), k is a number of 1 to 100, preferably 1 to 50, more preferably 1 to 25.

Examples of the tetrafunctional silane compound having formula (I) include tetraalkoxysilanes such as tetramethoxysilane, tetraethoxysilane, tetrapropoxysilane and tetrabutoxysilane; and tetraaryloxysilanes such as tetraphenoxysilane. Inter alia, tetramethoxysilane, tetraethoxysilane, tetrapropoxysilane and tetrabutoxysilane are preferred, with tetramethoxysilane and tetraethoxysilane being more preferred.

Examples of the alkyl silicate having formula (II) include methyl silicate and ethyl silicate, with methyl silicate being preferred.

They may be used alone or in admixture of two or more.

The hydrophilic organic solvent used in step ($\alpha$) is not particularly limited as long as the tetrafunctional silane compound having formula (I), the alkyl silicate having formula (II) and water are soluble therein. Examples thereof include alcohols; cellosolves such as methyl cellosolve, ethyl cellosolve, butyl cellosolve and cellosolve acetate; ketones such as acetone and methyl ethyl ketone; and ethers such as dioxane and tetrahydrofuran. Inter alia, alcohols and cellosolves are preferred, with alcohols being more preferred.

Typical of the alcohol are alcohols having the general formula (VI):

$R^6OH$ (VI)

wherein $R^6$ is a $C_1$-$C_6$ monovalent hydrocarbon group.

In formula (VI), $R^6$ is a monovalent hydrocarbon group of 1 to 6 carbon atoms, preferably 1 to 4 carbon atoms, more preferably 1 or 2 carbon atoms. Examples of the monovalent hydrocarbon group $R^6$ are as exemplified above for $R^5$. Inter alia, $R^6$ is preferably methyl, ethyl, n-propyl or isopropyl, more preferably methyl or ethyl.

Examples of the alcohol having formula (VI) include methanol, ethanol, propanol, isopropanol and butanol, with methanol and ethanol being preferred. As the carbon count of an alcohol increases, the resulting silica particles have a larger particle size. Accordingly, methanol is preferred for obtaining the desired silica particles having a smaller particle size.

The amount of water used in the hydrolytic condensation is preferably 0.5 to 5 moles, more preferably 0.6 to 2 moles, even more preferably 0.7 to 1 mole per mole of the total of the tetrafunctional silane compound having formula (I) and/or the alkyl silicate having formula (II). The ratio of the hydrophilic organic solvent and water is preferably such that 10 to 200 parts by weight of the hydrophilic organic solvent is present per 100 parts by weight of water.

Examples of the basic substance used in step ($\alpha$) include ammonia, dimethylamine and diethylamine. Inter alia, ammonia and diethylamine are preferred, with ammonia being more preferred. The predetermined amount of the basic substance is dissolved in water to form an aqueous (basic) solution, which is mixed with the hydrophilic organic solvent.

The amount of the basic substance used is preferably 0.01 to 2 moles, more preferably 0.02 to 0.5 mole, even more preferably 0.04 to 0.12 mole per mole of the total of the tetrafunctional silane compound having formula (I) and/or the alkyl silicate having formula (II). As the amount of the basic substance is smaller, the desired silica particles having a smaller particle size are obtained.

In one procedure, after the basic substance is added to a mixture of the hydrophilic organic solvent and water, the basic substance is added to the mixture along with the tetrafunctional silane compound having formula (I) and/or the alkyl silicate having formula (II). In another procedure, the basic substance is added to a mixture of the hydrophilic organic solvent and water simultaneously with the tetrafunctional silane compound and/or the alkyl silicate and the hydrophilic organic solvent.

The reaction conditions of step ($\alpha$) are not particularly limited. Step ($\alpha$) may be carried out under prior art well-known conditions, for example, preferably at about 10 to 80°C for about 1 to 10 hours.

The resulting dispersion of hydrophilic silica particles in the solvent mixture may be directly used in step (β). The preferred procedure involves adding water to the dispersion of hydrophilic silica particles in the solvent mixture, distilling off the hydrophilic organic solvent to convert the dispersion to an aqueous dispersion whereby the remaining alkoxy groups are hydrolyzed, that is, converting the dispersion to an aqueous dispersion of hydrophilic silica particles.

The dispersing medium of the dispersion of silica particles in the solvent mixture can be changed to water, for example, by the steps of adding water to the dispersion and distilling off the hydrophilic organic solvent (repeating the steps if necessary). The amount of water added herein is preferably 50 to 200 parts by weight, more preferably 80 to 150 parts by weight per 100 parts by weight of the total of the hydrophilic organic solvent used and the alcohol created in the hydrophilic silica particle synthesizing step.

• Step (β): Surface treatment of hydrophilic silica particles

Step (β) involves adding either one or both of a trifunctional silane compound having the general formula (III) and a (partial) hydrolytic condensate thereof to the dispersion of hydrophilic silica particles in the solvent mixture resulting from step (α), and treating the surface of the hydrophilic silica particles, obtaining a dispersion of silica particles (intermediate hydrophobic silica particles) which is intermediate component (B).

$$R^7Si(OR^8)_3 \qquad (III)$$

Herein $R^7$ is a $C_1$-$C_{20}$ substituted or unsubstituted monovalent hydrocarbon group and $R^8$ which may be identical or different is a $C_1$-$C_6$ monovalent hydrocarbon group.

In formula (III), $R^7$ is a substituted or unsubstituted monovalent hydrocarbon group of 1 to 20 carbon atoms, preferably 1 to 10 carbon atoms, more preferably 1 to 3 carbon atoms, even more preferably 1 or 2 carbon atoms. The monovalent hydrocarbon group $R^7$ may be straight, branched or cyclic. Examples thereof include alkyl groups such as methyl, ethyl, n-propyl, isopropyl, n-butyl, n-hexyl and n-decyl. Of these, $R^7$ is preferably methyl, ethyl, n-propyl or isopropyl, more preferably methyl or ethyl. In the monovalent hydrocarbon group, some or all of the hydrogen atoms may be substituted by halogen such as fluorine, chlorine and bromine. Fluorinated alkyl groups are preferred.

In formula (III), $R^8$ which may be identical or different is a monovalent hydrocarbon group of 1 to 6 carbon atoms, preferably 1 to 3 carbon atoms, more preferably 1 or 2 carbon atoms. Examples of the group $R^8$ are as exemplified above for $R^5$. Inter alia, $R^8$ is preferably methyl, ethyl or n-propyl, more preferably methyl or ethyl.

Examples of the trifunctional silane compound having formula (III) include unsubstituted or halo-substituted trialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, butyltrimethoxysilane, butyltriethoxysilane, hexyltrimethoxysilane, trifluoropropyltrimethoxysilane, and heptadecafluorodecyltrimethoxysilane. Inter alia, methyltrimethoxysilane, methyltriethoxysilane, ethyltrimethoxysilane and ethyltriethoxysilane are preferred, with methyltrimethoxysilane and methyltriethoxysilane being more preferred.

The amount of the trifunctional silane compound having formula (III) added is preferably 0.001 to 1 mole, more preferably 0.01 to 0.4 mole, even more preferably 0.01 to 0.2 mole per mole of Si atoms in the hydrophilic silica particles resulting from step (α). When the addition amount is at least 0.001 mole, the resulting component (B) has a higher hydrophobicity and better dispersibility. When the addition amount is up to 1 mole, the risk of component (B) agglomerating together is minimized.

Although the treating conditions of step (β) are not particularly limited, the preferred conditions are about 10 to 80°C for about 1 to 10 hours.

• Step (γ): Surface treatment of intermediate component (B)

Step (γ) involves changing the dispersing medium of the dispersion of silica particles in solvent mixture resulting from step (β) as intermediate component (B) to another solvent, typically ketone solvent, to form a dispersion of intermediate hydrophobic silica particles in ketone solvent, and adding either one or both of a silazane compound having the general formula (IV) and a monofunctional silane compound having the general formula (V) to the ketone solvent dispersion, to treat the surface of silica particles as intermediate component (B), thus obtaining hydrophobic silica particles as component (B). Through this step, silanol groups remaining on the surface of intermediate hydrophobic silica particles are converted to triorganosilyl, whereby $R^9{}_3SiO_{1/2}$ units are introduced into the surface.

$$R^9{}_3SiNHSiR^9{}_3 \qquad (IV)$$

$$R^9{}_3SiX \qquad (V)$$

Herein $R^9$ which may be identical or different is a $C_1$-$C_6$ substituted or unsubstituted monovalent hydrocarbon group, and X is OH or a hydrolyzable group.

In formulae (IV) and (V), $R^9$ which may be identical or different is a substituted or unsubstituted monovalent hydrocarbon group of 1 to 6 carbon atoms, preferably 1 to 4 carbon atoms, more preferably 1 or 2 carbon atoms. Examples of the group $R^9$ are as exemplified above for $R^5$. Inter alia, $R^9$ is preferably methyl, ethyl or n-propyl, more preferably methyl or ethyl. In the monovalent hydrocarbon group, some or all of the hydrogen atoms may be substituted by halogen atoms such as fluorine, chlorine and bromine. Fluorine-substituted alkyl groups being preferred.

X is OH or a hydrolyzable group. Examples of the hydrolyzable group include chlorine; alkoxy groups such as methoxy and ethoxy; amino, N-methylamino, N,N'-dimethylamino, N-ethylamino, and N,N'-diethylamino; and acyloxy groups such as acetoxy. Inter alia, alkoxy and amino groups are preferred. The alkoxy groups are more preferred, with methoxy and ethoxy being most preferred.

Examples of the silazane compound having formula (IV) include hexamethyldisilazane, hexaethyldisilazane, and tetramethyldivinyldisilazane, with hexamethyldisilazane being preferred.

Examples of the monofunctional silane compound having formula (V) include monosilanol compounds such as trimethylsilanol and triethylsilanol; monochlorosilanes such as trimethylchlorosilane and triethylchlorosilane; monoalkoxysilanes such as trimethylmethoxysilane and trimethylethoxysilane; monoaminosilanes such as trimethylsilyldimethylamine and trimethylsilyldiethylamine; and monoacyloxysilanes such as trimethylacetoxysilane. Inter alia, trimethylsilanol, trimethylmethoxysilane and trimethylsilyldiethylamine are preferred, with trimethylsilanol and trimethylmethoxysilane being more preferred.

These compounds may be used alone or in admixture of two or more.

The amount of the silazane compound having formula (IV) and/or the monofunctional silane compound having formula (V) used is preferably 0.1 to 0.5 mole, more preferably 0.2 to 0.4 mole, even more preferably 0.25 to 0.35 mole per mole of Si atoms in the intermediate hydrophobic silica particles resulting from step (β). When the amount is at least 0.1 mole, the resulting hydrophobic silica particles have a higher hydrophobicity and better dispersibility. When the cost and other factors are taken into account, an amount of up to 0.5 mole is sufficient.

The dispersing medium in the dispersion of the intermediate hydrophobic silica particles in the solvent mixture resulting from step (β) can be changed from the solvent mixture of water or hydrophilic organic solvent and the alcohol resulting from hydrolysis to a ketone solvent by adding the ketone solvent to the dispersion of the intermediate hydrophobic silica particles in the solvent mixture and distilling off the mixture of water or hydrophilic organic solvent and the alcohol (repeating the steps if necessary). The preferred conditions in this step include about 10 to 150°C for about 1 to 20 hours.

The amount of the ketone solvent added is preferably 50 to 500 parts by weight, more preferably 100 to 300 parts by weight per 100 parts by weight of the intermediate hydrophobic silica particles. Examples of the ketone solvent include methyl ethyl ketone, methyl butyl ketone and acetylacetone, with methyl isobutyl ketone being preferred.

Although the surface treatment conditions in step (γ) are not particularly limited, the preferred conditions are at about 10 to 150°C for about 1 to 20 hours.

Component (B) prepared as above is obtained as powder by conventional means such as drying under normal pressure at room temperature or elevated temperature or vacuum drying.

(C) Photopolymerization initiator

Component (C) is a photopolymerization initiator. Examples of the photopolymerization initiator which can be used herein include 2,2-diethoxyacetophenone, 2,2-dimethoxy-1,2-diphenylethan-1-one (Omnirad 651), 1-hydroxycyclohexyl phenyl ketone (Omnirad 184), 2-hydroxy-2-methyl-1-phenyl-propan-1-one (Omnirad 1173), 2-hydroxy-1-{4-[4-(2-hydroxy-2-methyl-propionyl)benzyl]phenyl}-2-methyl-propan-1-one (Omnirad 127), phenyl glyoxylic acid methyl ester (Omnirad MBF), 2-methyl-1-[4-(methylthio)phenyl]-2-morpholinopropan-1-one (Omnirad 907), 2-benzyl-2-dimethylamino-1-(4-morpholinophenyl)-1-butanone (Omnirad 369), bis(2,4,6-trimethylbenzoyl)-phenylphosphine oxide (Omnirad 819), 2,4,6-trimethylbenzoyl-diphenyl-phosphine oxide (Omnirad TPO), and ethyl phenyl(2,4,6-trimethylbenzoyl)phosphinate (Omnirad TPO-L), all available from IGM Resins B.V. These compounds may be used alone or in admixture of two or more.

Of these, preference is given in view of the compatibility with components (A) and (B) to 2,2-diethoxyacetophenone, 2-hydroxy-2-methyl-1-phenyl-propan-1-one (Omnirad 1173), bis(2,4,6-trimethylbenzoyl)-phenylphosphine oxide (Omnirad 819), 2,4,6-trimethylbenzoyl-diphenyl-phosphine oxide (Omnirad TPO H), and ethyl phenyl(2,4,6-trimethylbenzoyl)phosphinate (Omnirad TPO-L), with liquid ethyl phenyl(2,4,6-trimethylbenzoyl)phosphinate (Omnirad TPO-L) being more preferred.

The amount of the photopolymerization initiator added is 0.01 to 20 parts by weight, preferably 0.1 to 10 parts by weight per 100 parts by weight of component (A). At least 0.01 part by weight ensures surface cure whereas up to 20 parts by weight eliminates the risk of adversely affecting deep-section cure.

(D) UV absorber having light absorption at 360 to 410 nm

To the composition of the invention, a UV absorber having light absorption at wavelength 360 to 410 nm may be added in order to tailor the curability during optical fabrication on 3D printers.
Examples of the UV absorber which can be used herein include 2-(2H-benzotriazol-2-yl)-6-dodecyl-4-methylphenol (Tinuvin 571, BASF), benzenepropanoic acid 3-(2H-benzotriazol-2-yl)-5-(1,1-dimethylethyl)-4-hydroxy C7-C9 branched or straight alkyl ester (Tinuvin 384-2, BASF), 2-(5-chloro-2-benzotriazolyl)-6-tert-butyl-p-cresol (Tinuvin 326, BASF), the reaction product of 2-(4,6-bis(2,4-dimethylphenyl)-1,3,5-triazin-2-yl)-5-hydroxyphenyl with [(C10-C16, mainly C12-C13 alkyloxy)methyl]oxirane (Tinuvin 400, BASF), thioxanthone, 2-isopropylthioxanthone, 2,4-diethylthioxanthone, benzophenone, camphorquinone, 1-phenyl-1,2-propanedione, diethylaminohydroxybenzoyl hexyl benzoate (Uvinul A Plus, BASF), 1-(4-tert-butylphenyl)-3-(4-methoxyphenyl)-1,3-propanedione, and 2-ethylhexyl 4-methoxycinnamate. These compounds may be used alone or in admixture of two or more.
When used, the amount of the UV absorber added is preferably 0.01 to 20 parts by weight, more preferably 0.1 to 10 parts by weight per 100 parts by weight of component (A). At least 0.01 part by weight of the UV absorber is sufficient to exert its effect whereas up to 20 parts by weight eliminates the risk of adversely affecting deep-section cure.

(E) Colorant

To the composition, any of various colorants may be added for the purpose of tailoring the curability of the composition or coloring the composition.
The colorant may be selected from conventional pigments such as iron oxide, titanium oxide and zinc oxide, dyes, and carbon black. They may be used alone or in admixture of two ore more.
When used, the amount of the colorant added is preferably 0.01 to 20 parts by weight per 100 parts by weight of component (A). At least 0.01 part by weight of the colorant is sufficient to exert its effect whereas up to 20 parts by weight eliminates the risk of adversely affecting deep-section cure.
It is noted that additives including silane coupling agents, adhesion aids, polymerization inhibitors, antioxidants, UV absorbers serving as light resistant stabilizers, and photo-stabilizers may be added to the inventive composition as long as the benefits of the invention are not lost.
Also, the inventive composition may be used in admixture with another resin composition.

[2] Method of preparing silicone composition

The method of preparing the inventive silicone composition is not particularly limited and any of prior art well-known methods may be used. Specifically, the inventive silicone composition is obtained by mixing components (A) to (C) and other components if necessary.
The method of preparing the inventive silicone composition preferably involves the following steps (1) and (2):

step (1): preparing component (B) by the method comprising steps ($\alpha$), ($\beta$) and ($\gamma$), and

step (2): mixing components (A) to (C) and other components if necessary.

• Step (1): Preparing component (B)

Step (1) is to prepare component (B) by the method comprising the following steps ($\alpha$), ($\beta$) and ($\gamma$).
Step ($\alpha$): Step ($\alpha$) is to hydrolyze and condense either one or both of a tetrafunctional silane compound having the general formula (I) and an alkyl silicate having the general formula (II) in the presence of a basic substance in a mixture of a hydrophilic organic solvent and water, obtaining a dispersion of hydrophilic silica particles.

$$Si(OR^5)_4 \qquad (I)$$

[Chem. 8]

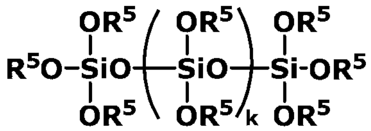

(II)

Herein $R^5$ and k are as defined above.

Step (β): Step (β) involves adding either one or both of a trifunctional silane compound having the general formula (III) and a (partial) hydrolytic condensate thereof to the dispersion of hydrophilic silica particles in the solvent mixture resulting from step (α), and treating the surface of the hydrophilic silica particles, obtaining a dispersion of silica particles which is intermediate component (B).

$R^7Si(OR^8)_3$ (III)

Herein $R^7$ and $R^8$ are as defined above.

Step (γ): Step (γ) involves adding either one or both of a silazane compound having the general formula (IV) and a monofunctional silane compound having the general formula (V) to the dispersion of silica particles resulting from step (β) as intermediate component (B), treating the surface of silica particles as intermediate component (B), thus obtaining hydrophobic silica particles as component (B).

$R^9{}_3SiNHSiR^9{}_3$ (IV)

$R^9{}_3SiX$ (V)

Herein $R^9$ and X are as defined above.

The method of preparing component (B) is as described above.

• Step (2): Mixing components (A) to (C)

The step of mixing components (A) to (C) is not particularly limited. The UV-curable silicone composition for stereolithography can be obtained by mixing components (A) to (C) and other components, if necessary, in any desired order and stirring them. The equipment used in stirring and similar operations is not particularly limited, and a mortar, three-roll mill, ball mill or planetary mixer may be used. These machines may be used in combination.

The inventive silicone composition may be of either one- or two-part type. The composition of one-part type may be obtained, for example, by admitting components (A) to (C) and other components, if necessary, to a gate mixer (trade name: planetary mixer by Inoue Mfg. Co., Ltd.). Alternatively, the composition may be obtained by admitting components (A) and (B) to a gate mixer, mixing at room temperature under reduced pressure for 1 hour, cooling the mixture, adding component (C) to the mixture, and mixing at room temperature for 30 minutes.

For optical fabrication, the UV-curable silicone composition should preferably have a viscosity at 23°C of up to 500 Pa·s, more preferably up to 400 Pa·s, even more preferably up to 100 Pa·s. A viscosity in excess of 500 Pa·s may lead to inefficient optical fabrication, failing to form a body of desired shape accurately. Although the lower limit is not critical, a viscosity of at least 1 Pa·s is preferred, with at least 2 Pa·s being more preferred.

As used herein, the viscosity is measured by a rotational viscometer, for example, BL, BH, BS or cone-plate viscometer or rheometer (the same holds true, hereinafter).

[3] Cured product

The UV-curable silicone composition for stereolithography can be cured into a cured product having excellent rubber physical properties through the following steps:

step (i) of irradiating UV to the UV-curable silicone composition for radically curing the composition to form a primary cured product, and

step (ii) of condensation curing the primary cured product to form a secondary cured product.

• Step (i): Obtaining primary cured product

Step (i) includes irradiating UV to the UV-curable silicone composition for radically curing the composition to form a primary cured product.
Examples of the light source for irradiating UV in step (i) include UV-LED lamps, high-pressure mercury lamps, ultra high-pressure mercury lamps, metal halide lamps, carbon arc lamps and xenon lamps.
Preferably, UV is irradiated, for example, approximately at room temperature (25°C) in an inert gas atmosphere such as nitrogen or argon.
When the composition is cured into a primary cured product with UV irradiation, the dose (accumulative light quantity) of UV is preferably 1 to 10,000 mJ/$cm^2$, more preferably 10 to 8,000 mJ/$cm^2$ relative to a sheet of about 2.0 mm thick shaped from the composition. That is, when UV having an illuminance of 100 mW/$cm^2$ is used, UV may be irradiated for about 0.01 to 100 seconds.
The primary cured product resulting from step (i) should preferably have a tensile strength of at least 2.0 MPa, more preferably at least 3.0 MPa. Also, the cured product should preferably have an elongation at break of at least 150%, more preferably at least 200%. These values are measured according to JIS K6249 (The same holds true, hereinafter).

• Step (ii): Obtaining secondary cured product

Step (ii) includes condensation curing the primary cured product to form a secondary cured product.
In the condensation cure of step (ii), the hydrolytic condensation of components (A) and/or (B) can be promoted by adding moisture. Specifically, the condensation cure is preferably carried out in an environment of 50% to 80% RH and 20 to 85°C for 12 to 36 hours, especially 18 to 24 hours.
The secondary cured product resulting from step (ii) should preferably have a tensile strength of at least 4.5 MPa, more preferably at least 5.0 MPa. The cured product should preferably have an elongation at break of at least 300%, more preferably at least 250%.
In one embodiment of the invention, the composition is irradiated at 25°C with UV of wavelength 405 nm so as to give a dose of 8,000 mJ/$cm^2$ and further cured in an environment of 85°C and 85% RH for 24 hours. The resulting cured product having a thickness of 2.0 mm has a tensile strength and elongation at break in the above-defined range.

## EXAMPLES

Synthesis Examples, Comparative Synthesis Examples, Examples, and Comparative Examples are given below for further illustrating the invention although the invention is not limited thereto.
The compounds used in Examples are shown below. In the formulae, Me stands for methyl and Ph for phenyl.

[1] Components for blending

Component (A)

[Chem. 9]

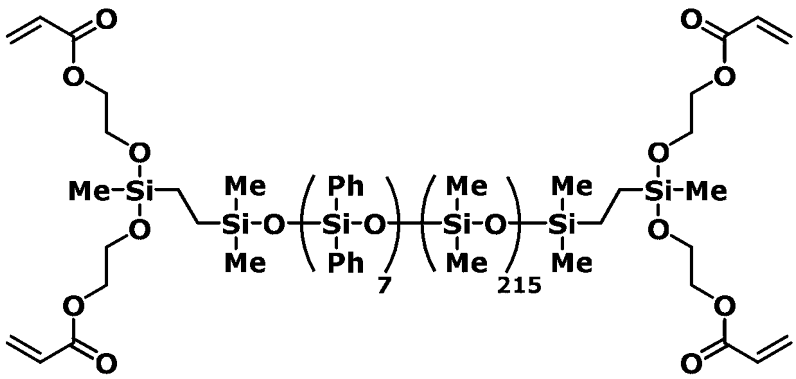

(A-1)

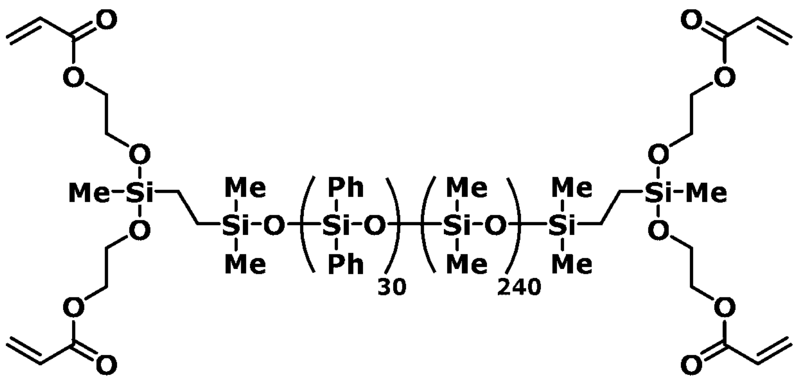

(A-2)

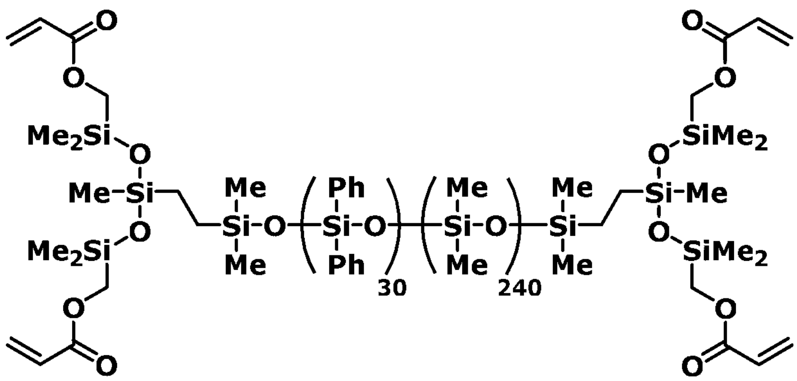

(cA-1)

The arrangement order of the siloxane units within parentheses is arbitrary.

Component (B)

(B-1) hydrophobic silica particles obtained in Synthesis Example 1
(B-2) hydrophobic silica particles obtained in Synthesis Example 2
(B-3) hydrophobic silica particles obtained in Synthesis Example 3
(cB-1) hydrophobic silica particles obtained in Comparative Synthesis Example 1

Component (C)

(C-1) ethyl phenyl(2,4,6-trimethylbenzoyl)phosphinate (Omnirad TPO-L, IGM Resins B.V.)

[2] Synthesis of hydrophobic silica microparticles

[Synthesis Example 1]

• Step (α): Synthesis of hydrophilic silica particles

A 3-L glass reactor equipped with a stirrer, dropping funnel and thermometer was charged with 623.7 g of methanol, 41.4 g of water, and 49.8 g of 28 wt% aqueous ammonia, which were mixed. The solution was conditioned at 35°C, with stirring, 1163.7 g of tetramethoxysilane and 418.4 g of 5.4 wt% aqueous ammonia were added dropwise over 5 hours after simultaneous start. At the end of addition, stirring was continued for a further 0.5 hour to carry out hydrolysis, obtaining a suspension of hydrophilic spherical silica particles. An ester adaptor and cooling tube were coupled to the glass reactor, which was heated at 60-70°C to distill off 649 g of methanol. Water, 1,600 g, was added to the reactor, which was heated at 70-90°C to distill off 160 g of methanol, obtaining an aqueous suspension of hydrophilic silica particles.

• Step (β): Surface treatment of hydrophilic silica particles

To the aqueous suspension at 25°C, 115.8 g (0.1 equivalent relative to $SiO_2$) of methyltrimethoxysilane and 46.6 g of 5.4 wt% aqueous ammonia were added dropwise over 0.5 hour. At the end of addition, the reactor was heated at 50°C, followed by aging for 1 hour. After the completion of reaction, the reactor was cooled at 25°C. With the surface treatment of hydrophilic silica particles in this way, there was obtained a dispersion of intermediate hydrophobic silica particles as intermediate component (B).

• Step (γ): Surface treatment of intermediate component (B)

To the dispersion, 1,000 g of methyl isobutyl ketone was added. With the liquid interface kept vigorously fluctuated, the dispersion was heated at 80-115°C over 11 hours to distill off 1,336 g of a mixture of methanol and water. To the resulting dispersion at 25°C, 357.4 g of hexamethyldisilazane was added. The dispersion was heated at 120°C for 3 hours to carry out trimethylsilation reaction of silica particles, obtaining hydrophobic silica particles. Thereafter, the dispersion was heated on an evaporator to evaporate off the solvent, obtaining 477 g of hydrophobic silica particles (B-1).

[Synthesis Example 2]

By the same procedure as Synthesis Example 1 aside from using 901.9 g of methyl silicate (Methyl Silicate 51 by Colcoat Co., Ltd.) instead of 1163.7 g of tetramethoxysilane in step (α), there was obtained 470 g of hydrophobic silica particles (B-2).

[Synthesis Example 3]

By the same procedure as Synthesis Example 1 aside from changing the amount of methyltrimethoxysilane in step (β) to 11.6 g (0.01 equivalent relative to $SiO_2$), there was obtained 360 g of hydrophobic silica particles (B-3).

[Comparative Synthesis Example 1]

A 3-L glass reactor equipped with a stirrer, dropping funnel and thermometer was charged with 60 g of isopropanol and 100 g of Snowtex® OL (colloidal silica by Nissan Chemical Corp., average particle size 50 nm, dispersed in water in a solid concentration of 20 wt%) as silica particles, which were mixed. To the solution, 0.48 g of methyltrimethoxysilane was added dropwise over 0.5 hour. At the end of addition, the solution was heated at 50°C and aged for 1 hour. After the completion of reaction, the solution was cooled at 25°C, completing the surface treatment of silica particles.

Subsequently, 0.78 g of hexamethyldisilazane was added to the dispersion, which was heated for reaction at 105°C for 2 hours. Finally, 2.6 parts by weight of 35 wt% hydrochloric acid aqueous solution was added, allowing silica particles to settle down. Then the solvent was evaporated off on an evaporator, obtaining hydrophobic silica particles (cB-1).

[Measurement methods]

The hydrophobic silica particles obtained above were analyzed by the following measurement methods 1 and 2. The results are shown in Table 1.

1. Measurement of particle size of hydrophobic silica particles

(1) A glass bottle was charged with 0.1 g of a sample, 20 g of methanol was added, and the contents were stirred.
(2) The contents were dispersed on a ultrasonic dispersing unit for 10 minutes, obtaining a measuring specimen.
(3) The specimen of (2) was analyzed by a laser light scattering particle size distribution measuring system (Nanotrac 150, Nikkiso Co., Ltd.). The particle size is given by a volume basis median diameter (particle size corresponding to 50% accumulation when particle size distribution is expressed as cumulative distribution).

2. Measurement of hydrophobicity of hydrophobic silica particles (methanol titration method)

(1) 0.2 mg of a sample was metered into a 500-ml triangular flask.
(2) 50 ml of deionized water was added to (1), which were stirred by a stirrer.
(3) With stirring, methanol was added dropwise through a burette. The amount of methanol added until the sample was entirely suspended in deionized water was read.
(4) A hydrophobicity was computed according to the following formula.

$$\text{Hydrophobicity (\%)} = [\{\text{volume (mL) of methanol added}\}/\{\text{volume (mL) of methanol added} + \text{volume (ml) of deionized water}\}] \times 100$$

[Table 1]

| | Synthesis Example 1 | Synthesis Example 2 | Synthesis Example 3 | Comparative Synthesis Example 1 |
|---|---|---|---|---|
| Hydrophobic silica particles | B-1 | B-2 | B-3 | cB-1 |
| Particle size (nm) | 87 | 82 | 113 | 50 |
| Hydrophobicity | 67 | 67 | 66 | 58 |

[3] Preparation and evaluation of silicone compositions and preparation and evaluation of cured products

[Examples 1 to 5 and Comparative Examples 1 and 2]

Each of silicone compositions shown in Table 2 was prepared by mixing components (A) to (C) according to the formulation shown in Table 2. The viscosity of the composition in Table 2 is measured at 23°C by a rotational viscometer.
The silicone composition prepared above was cured on a UV curing system (CCS Inc.) under nitrogen atmosphere at room temperature (25°C) by irradiating UV of wavelength 405 nm in a dose of 8,000 mJ/$cm^2$. A primary cured product was obtained.
The primary cured product was treated in an environment of 85°C and 85% RH for 24 hours, obtaining a secondary cured product.
The primary and secondary cured products in the form of sheets having a thickness of 2.0 mm were measured for hardness, elongation at break and tensile strength according to JIS K 6249: 2003.

[Table 2]

| | | Example | | | | | Comparative Example | |
|---|---|---|---|---|---|---|---|---|
| | | 1 | 2 | 3 | 4 | 5 | 1 | 2 |
| Formulation (pbw) | A-1 | 100 | 100 | 100 | 100 | 0 | 0 | 100 |
| | A-2 | 0 | 0 | 0 | 0 | 100 | 0 | 0 |
| | cA-1 | 0 | 0 | 0 | 0 | 0 | 100 | 0 |
| | B-1 | 100 | 0 | 0 | 0 | 0 | 0 | 0 |
| | B-2 | 0 | 100 | 140 | 0 | 100 | 100 | 0 |
| | B-3 | 0 | 0 | 0 | 100 | 0 | 0 | 0 |
| | cB-1 | 0 | 0 | 0 | 0 | 0 | 0 | 140 |
| | C-1 | 0.5 | 0.5 | 0.5 | 0.5 | 0.5 | 0.5 | 0.5 |
| Physical properties of composition | Outer appearance (visual observation) | transparent, pale yellow | transparent, pale yellow | transparent, pale yellow | pale yellow | transparent, pale yellow | pale yellow | white turbid |
| | Viscosity (Pa·s) | 10 | 14 | 37 | 18 | 33 | 66 | unmeasurable |
| Physical properties of primary cured product | Hardness (Durometer Type A) | 45 | 45 | 47 | 40 | 35 | 28 | uncured |
| | Tensile strength (MPa) | 3.0 | 3.6 | 4.8 | 2.5 | 3.8 | 2.9 | uncured |
| | Elongation at break (%) | 400 | 220 | 300 | 230 | 300 | 300 | uncured |
| Physical properties of secondary cured product | Hardness (Durometer Type A) | 35 | 36 | 41 | 35 | 27 | 40 | uncured |
| | Tensile strength (MPa) | 6.1 | 6.7 | 7.0 | 4.6 | 6.9 | 3.7 | uncured |
| | Elongation at break (%) | 350 | 370 | 330 | 330 | 440 | 190 | uncured |

As seen from Table 2, the UV-curable silicone compositions prepared in Examples 1 to 5 have a low viscosity compatible with the optical fabrication. The cured products obtained through UV irradiation and moisture treatment have satisfactory dynamic properties.

In contrast, Comparative Example 1 wherein the radical polymerizable group-containing group in component (A) is changed to a group bonded to a silicon atom via an oxygen atom directly bonded to the silicon atom and a dimethylsilyl group shows low condensation reactivity with moisture, and the resulting secondary cured product has poor physical properties. The composition of Comparative Example 2 using silica particles having a low hydrophobicity shows an excessive viscosity buildup and insufficient cure.

## Claims

1. A UV-curable silicone composition for stereolithography comprising:

    (A) an organopolysiloxane containing per molecule at least two radical polymerizable group-containing groups (exclusive of a group containing a heteroatom other than oxygen) each bonded to a silicon atom via an oxygen atom directly bonded to the silicon atom,
    (B) hydrophobic silica particles having an average particle size of 10 to 1,000 nm and a hydrophobicity of at least 60% as measured by the methanol titration method, and
    (C) a photopolymerization initiator,

    wherein a cure product of 2.0 mm thick obtained by irradiating UV of wavelength 405 nm to the composition at 25°C in a dose of 8,000 mJ/cm$^2$, and curing in an environment of 85°C and 85% RH for 24 hours has a tensile strength of at least 4.5 MPa and an elongation at break of at least 300%.

2. The UV-curable silicone composition of claim 1 wherein component (A) is an organopolysiloxane containing 2 to 6 acryloyloxyalkyloxy or methacryloyloxyalkyloxy groups each bonded to a silicon atom per molecule.

3. The UV-curable silicone composition of claim 1 wherein component (A) is an organopolysiloxane having the formula (1):

    [Chem. 1]

    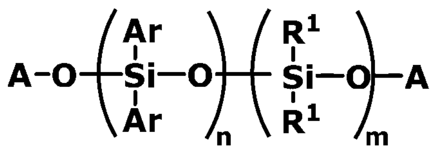

    (1)

    wherein n is a number satisfying $1 \leq n \leq 1,000$, m a number satisfying $1 \leq m \leq 1,000$, the order of arrangement of siloxane units with n and m is arbitrary, Ar is each independently a $C_6$-$C_{20}$ aryl group, $R^1$ is each independently a $C_1$-$C_{20}$ monovalent hydrocarbon group, A is a group having the formula (2):

    [Chem. 2]

    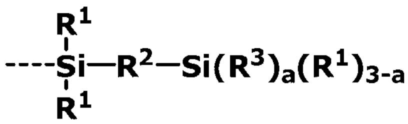

    (2)

    wherein $R^1$ is as defined above, $R^2$ is oxygen or a $C_1$-$C_{20}$ alkylene group, $R^3$ is each independently an acryloyloxyalkyloxy or methacryloyloxyalkyloxy group, "a" is a number satisfying $1 \leq a \leq 3$, the broken line designates a valence bond.

4. The UV-curable silicone composition of any one of claims 1 to 3, comprising

100 parts by weight of component (A),
10 to 500 parts by weight of component (B), and
0.01 to 20 parts by weight of component (C).

**5.** The UV-curable silicone composition of any one of claims 1 to 4, having a viscosity of up to 500 Pa·s at 23°C.

**6.** A cured product of a UV-curable silicone composition for stereolithography comprising:

(A) an organopolysiloxane containing per molecule at least two radical polymerizable group-containing groups (exclusive of a group containing a heteroatom other than oxygen) each bonded to a silicon atom via an oxygen atom directly bonded to the silicon atom,
(B) hydrophobic silica particles having an average particle size of 10 to 1,000 nm and a hydrophobicity of at least 60% as measured by the methanol titration method, and
(C) a photopolymerization initiator,

wherein the cure product has a tensile strength of at least 4.5 MPa and an elongation at break of at least 300% when its thickness is 2.0 mm.

**7.** A method for curing the UV-curable silicone composition of any one of claims 1 to 5, comprising:

step (i) of irradiating UV to the UV-curable silicone composition of any one of claims 1 to 5 for radically curing the composition to form a primary cured product, and
step (ii) of condensation curing the primary cured product to form a secondary cured product.

**8.** The method of claim 7 wherein the condensation cure in step (ii) is moisture cure.

## INTERNATIONAL SEARCH REPORT

International application No.
**PCT/JP2025/014752**

**A. CLASSIFICATION OF SUBJECT MATTER**

***C08F 299/08***(2006.01)i; ***B29C 64/106***(2017.01)i; ***B33Y 10/00***(2015.01)i; ***B33Y 70/00***(2020.01)i; ***C08K 3/36***(2006.01)i; ***C08K 9/06***(2006.01)i; ***C08L 83/06***(2006.01)i
FI: C08F299/08; C08K3/36; C08K9/06; C08L83/06; B29C64/106; B33Y70/00; B33Y10/00

According to International Patent Classification (IPC) or to both national classification and IPC

**B. FIELDS SEARCHED**

Minimum documentation searched (classification system followed by classification symbols)

C08F299/08; B29C64/106-64/135; B33Y10/00; B33Y70/00; C08K3/36; C08K9/06; C08L83/06; C08F2/50; C09D11/101

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/099864 A1 (TAIKA KK) 04 July 2013 (2013-07-04) claims, paragraphs [0037]-[0038], [0043], [0047]-[0048], [0050] | 1-8 |
| A | US 2022/0411634 A1 (HENKEL AG & CO. KGAA) 29 December 2022 (2022-12-29) claims, paragraphs [0050]-[0059], [0142]-[0149], [0175]-[0208] | 1-8 |
| A | CN 113511656 A (INSTITUTE OF CHEMISTRY, CHINESE ACADEMY OF SCIENCES) 19 October 2021 (2021-10-19) | 1-8 |
| A | JP 2020-528940 A (DOW SILICONES CORPORATION) 01 October 2020 (2020-10-01) | 1-8 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2025** | **01 July 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/014752**

| Patent document cited in search report | Publication date (day/month/year) | Patent family member(s) | Publication date (day/month/year) |
|---|---|---|---|
| WO 2013/099864 A1 | 04 July 2013 | US 2015/0175861 A1<br>claims, paragraphs [0052], [0056], [0060]-[0061], [0063]<br>EP 2799510 A1<br>CN 104024365 A<br>KR 10-2014-0111248 A<br>HK 1197261 A<br>TW 201344345 A | |
| US 2022/0411634 A1 | 29 December 2022 | EP 4108726 A1 | |
| CN 113511656 A | 19 October 2021 | (Family: none) | |
| JP 2020-528940 A | 01 October 2020 | US 2020/0109285 A1<br>WO 2018/223365 A1<br>TW 201903056 A<br>CN 110662804 A<br>KR 10-2020-0018497 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5890990 B
- JP 6687111 B
- JP 6962290 B
- JP 7342910 B